# EUROPEAN PATENT SPECIFICATION

(11) **EP 0 584 129 B1**
(45) Date of publication and mention of the grant of the patent: **23.07.1997**
(21) Application number: 92909603.0
(22) Date of filing: 08.05.1992
(51) Int. Cl.: B29C 47/02, G02B 6/44

(54) **MANUFACTURING CABLES**
VERFAHREN ZUM HERSTELLEN EINES KABELS
FABRICATION DE CABLES

(30) Priority: 11.05.1991 GB 9110256
(43) Date of publication of application: 02.03.1994
(73) Proprietor: PIRELLI GENERAL plc, London W1X 6BU (GB)
(72) Inventor: SHACKLETON, Nigel, Newport, Gwent NP44 5AD (GB)
(74) Representative: Abbie, Andrew Kenneth
(86) International application number: PCT/GB92/00839
(87) International publication number: WO 92/20510

(56) References cited:
- EP-A- 0 020 036
- DE-A- 3 922 475
- US-A- 2 626 302

## Description

This invention relates to a process and apparatus for manufacturing cables, particularly fibre optic, or optical fibre, cables, by plastics extrusion.

Fibre optic cables in which fibre optic elements are loosely contained within a channel or tube are currently manufactured by a multistage process. A channel strength member is first made e.g. by profile extrusion. Next the optical fibre, or fibre optic, element is fed into the channel which is closed by a close-fitting sealing strip. The assembly is then fed into an extruder to apply a protective plastics sheath.

In an attempt to reduce manufacturing costs it has been proposed to manufacture such a cable by a single extrusion. However this often results in a structure in which access to the fibre optic elements is rendered extremely difficult. It will be appreciated that it is necessary to access the elements, or fibres, at various points along a cable to provide junctions and terminations.

An object of the invention is to minimise or to overcome this disadvantage.

DE-A-3922475, cited during substantive examination of this application, discloses an optical communications cable having a strength member and an extruded plastics body surrounding the strength member. The body has a number of closed chambers loosely containing one or more optical wave guides which are introduced during the extrusion process.

The invention provides a method of manufacturing a fibre optic cable by extrusion of a plastics material through a die around at least one fibre optic element so as to contain the or each element loosely, characterized in that during extrusion the plastics flow is partitioned into two or more separate flows by a tubular member through which the or each fibre optic element is fed over a distance such that, when the flows recombine, a weak bond is formed at the interface therebetween whereby to facilitate selective splitting of the plastics of the cable to access the or each fibre optic element and in that the position of the tubular member is adjusted relative to the die whereby to balance or equalise the plastics flow.

A reinforced strength member may be incorporated in the cable.

The strength member may be a dielectric strength member.

The extruded plastics material may comprise polyvinyl chloride, a low smoke zero halogen material, or thermoplastic rubber.

The invention also includes an apparatus for manufacturing a fibre optic cable, the apparatus including a plastics extruder for providing a plastics protection around at least one fibre optic element by extrusion through a die, characterized by the extruder having: a tubular member through which the or each fibre optic element is fed and arranged to partition extruded plastics material into two or more separate flows over a distance such that, when the flows are recombined, a weak bond is formed therebetween whereby to facilitate selective splitting of the plastics of the cable to access the or each fibre optic element; and means for adjusting the position of the tubular member relative to the die whereby in use to balance or equalise the plastics flow.

Reference is here directed to our copending European Application EP-A-514091 of even date which relates to a cable construction formed e.g. by the process described in the present application.

In order that the invention may be well understood, an embodiment thereof, which is given by way of example only, will now be described with reference to the accompanying drawings, in which:
Fig. 1 is a cross-sectional part-schematic view of a split flow extrusion apparatus, or extruder;
Fig. 1a shows, enlarged, a die of the apparatus and a tubular member of a point assembly of the apparatus;
Fig. 2 is a perspective view showing the point assembly;
Fig. 3 is a cross-sectional view of a cable construction fabricated via the extruder of Fig. 1; and
Fig. 4 depicts a further cable construction.

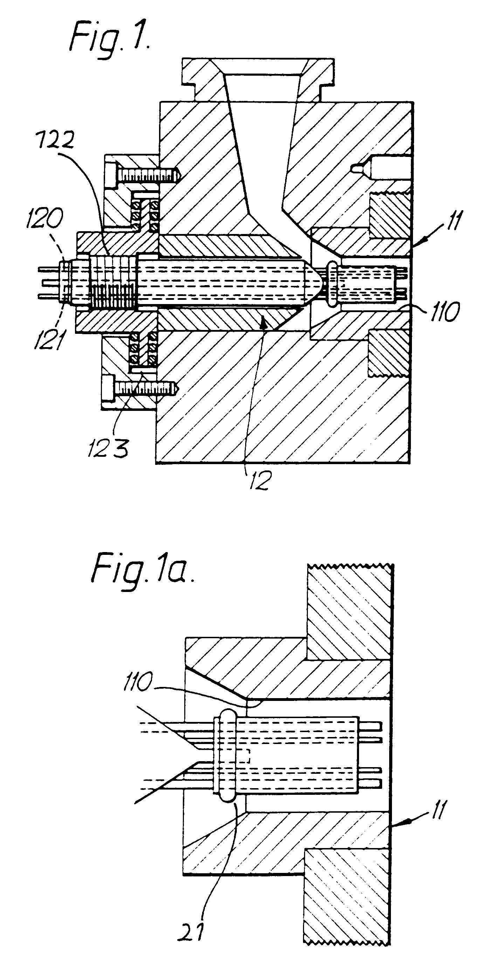

Referring to Figs 1 and 1a, the extruder includes a die 11 for defining the outer form of an extruded cable and into a throat 110 of which a point assembly 12 projects. The point assembly 12 has one or more passageways 120 for receiving respective optical fibre, or transmission, elements 34 to be sheathed and may also have a further passageway 121 for receiving a cable strength member, e.g. a dielectric strength member 31. Advantageously a bearing 123 is provided whereby the point assembly 12 may be rotated relative to the die 11 e.g. to impart an S-Z twist into the extruded cable.

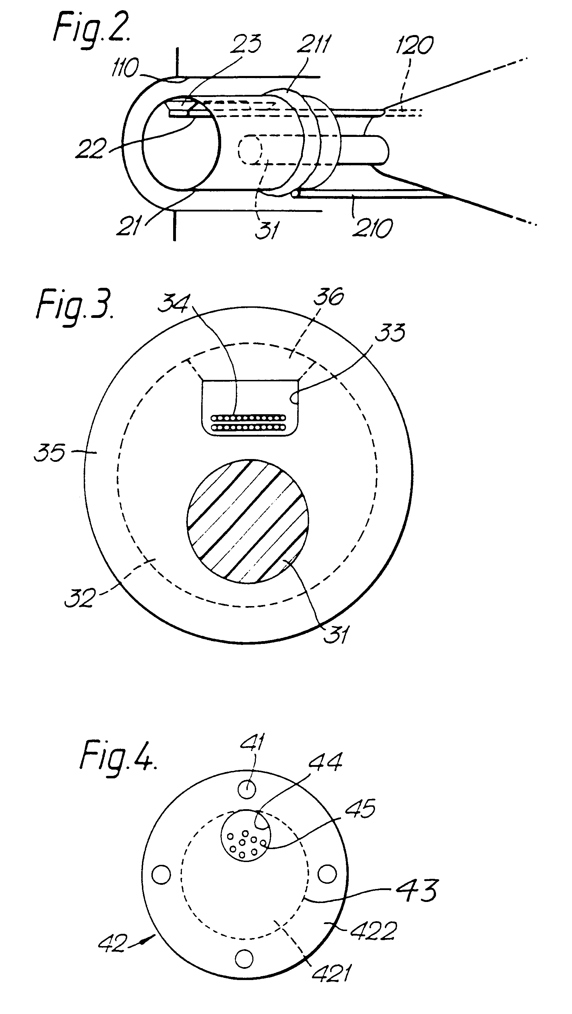

The construction of the point assembly 12 is shown schematically in Fig. 2 with only one passageway 120. As can be seen from Fig. 2 the assembly 12 includes a hollow generally cylindrical shield, or tubular member, 21 supported via a rod 210 and a circumferential clamp 211 whereby the position of the shield 21 within the die 11 may be adjusted. In use plastics material flows both through and outside the shield 21. Within the shield 21 a generally rectangular tube 22 is disposed. This tube receives a fibre optic ribbon element 34 and, in use, defines a channel 33 in the cable within which that element 34 is accommodated. The tube 22 communicates with the passageway 120 whereby the fibre optic ribbon element 34 may be fed into the extruder. In some applications the channel 33 containing the fibre optic element 34 may be filled with a water blocking gel during manufacture of the cable.

The tube 22 is supported within the shield 21 by two flat plates 23 extending from an inner surface of the shield 21. More than two flat plates 23 may be provided.

During extrusion the shield 21 and the plates 23 each provide a surface barrier between regions of extruding plastics material at least part way through the throat 110 of the die 11. We have found that, by separating the plastics flow within the die region, the rejoined flows extruding from the die 11 form a relatively weak bond therebetween. This is thought to result from a generally parallel orientation of the polymer molecules as a result of the high shear conditions within the die 11. In the finished cable this bond between adjacent regions of the plastics material is easily broken on application of pressure thereto.

Axial or linear adjustment of the position of the point assembly 12 relative to the die throat 110 may be provided by co-operating screw threads 122 (Fig. 1) on the point assembly 12 and a head of the extruder respectively. Rotational movement of the point assembly 12 e.g. to introduce an S/Z twist of the transmission element or elements 34 may be provided by the bearing 123 (Fig. 1) mounted on the extruder head, which bearing 123 carries the point assembly 12.

In use the axial position of the tubular member 21 of the point assembly 12 relative to the die throat 110 is adjusted to balance or equalise the flow of plastics material within and outside the tubular member 21. This ensures void-free coating of the extruded cable, or transmission package.

The technique may be employed with a number of cable plastics materials. These include, but are not limited to, plasticised polyvinyl chloride (PVC), low smoke zero halogen materials and thermoplastic rubbers. The plastics may contain a filter to control the extrusion properties of the material.

Fig. 3 shows a cable construction formed using the point assembly 12 of Fig. 2. The cable comprises a central strength member 31, formed e.g. from a glass fibre reinforced plastics material, surrounded by a body 32 of unreinforced plastics. The body 32 contains a channel 33 in which two optical fibre elements 34 are accommodated. Typically the optical fibre elements 34 are ribbon elements. The plastics body 32 has a circumferential outer, or sheathing, region 35 and a further capping region 36 immediately above the channel 33. The regions 35 and 36 are formed by the plastics flow partitioning technique described above.

Access to the fibre elements 34 is effected by first cutting into the body 32 above the channel 33 to reach the capping region 36. The plastics is peeled apart to expose the underlying plastics above the channel 33. The body 32 is then split along the capping region 36 to expose the channel 33 and access the fibre elements 34.

An alternative cable structure is shown in Fig. 4. This structure has a number of, typically four, dielectric strength members 41 generally symmetrically arranged around the circumference of a cable body 42. This body 42 comprises an inner plastics region, or member, 421 and an outer plastics region, or member, 422, there being a weak bond at the boundary 43 therebetween. The inner body member 421 incorporates a channel or tube 44 in which a number of optical fibre elements 45 are disposed. These elements 45 may comprise ribbon fibres or individual optical fibres. Advantageously the tube or channel 44 follows a generally helical path along the cable either as a on-handed helix or as alternate right and left-handed (S-Z) helices. In use, the optical fibre elements 45 are accessed by cutting into the outer body member 422 and peeling that member back by breaking the bond at the boundary 43 whereby to expose the tube or channel 44.

It will be appreciated that although the technique has been described with particular reference to optical fibre cables, it may also be employed in the manufacture of cables incorporating metal e.g. copper transmission elements.

The invention is also of application to the manufacture of self-supporting or aerial cables in which optical fibre elements are contained in a channel formed in a longitudinal dielectric strength member.

## Claims

1. A method of manufacturing a fibre optic cable by extrusion of a plastics material through a die (11) around at least one fibre optic element (34) so as to contain the or each element (34) loosely, characterized in that during extrusion the plastics flow is partitioned into two or more separate flows by a tubular member (21) through which the or each fibre optic element (34) is fed over a distance such that, when the flows recombine, a weak bond is formed at the interface therebetween whereby to facilitate selective splitting of the, plastics of the cable to access the or each fibre optic element (34) and in that the position of the tubular member (21) is adjusted relative to the die (11) whereby to balance or equalise the plastics flow.

2. A method as claimed in claim 1, wherein a reinforced strength member (31, 41) is incorporated in the cable.

3. A method as claimed in claim 2, wherein said strength member (31, 41) is a dielectric strength member.

4. A method as claimed in claim 1, 2 or 3, wherein the extruded plastics material comprises polyvinyl chloride, a low smoke zero halogen material, or thermoplastic rubber.

5. An apparatus for manufacturing a fibre optic cable, the apparatus including a plastics extruder for providing a plastics protection around at least one fibre optic element (34, 45) by extrusion through a die (11), characterized by the extruder having: a tubular member (21) through which the or each fibre optic element (34) is fed and arranged to partition extruded plastics material into two or more separate flows over a distance such that, when the flows are recombined, a weak bond is formed therebetween whereby to facilitate selective splitting of the plastics of the cable to access the or each fibre optic element (34); and means (122) for adjusting the position of the tubular member (21) relative to the die (11) whereby in use to balance or equalise the plastics flow.

## Patentansprüche

1. Verfahren zum Herstellen eines faseroptischen Kabels durch Extrusion eines Kunststoffmaterials durch eine Düse (11), um mindestens ein faseroptisches Element (34) herum, so daß das Element (34) oder alle Elemente (34) lose eingeschlossen werden, dadurch gekennzeichnet, daß während der Extrusion der Kunststoff-Fluß durch ein röhrenförmiges Element (21) in zwei oder mehr Kunststoff-Flüsse aufgeteilt wird, wobei durch das röhrenförmige Element (21) das faseroptische Element (34) oder alle faseroptischen Elemente (34) so über eine Entfernung geführt werden, daß bei einem Wieder-Zusammentreffen der Flüsse an den dazwischen auftretenden Nahtstellen eine schwache Verbindung entsteht, wodurch ein selektives Trennen der Kunststoffteile des Kabels ermöglicht wird und dadurch das faseroptische Element (34) oder die faseroptischen Elemente (34) zugänglich werden, und dadurch, daß die Position des röhrenförmigen Elements (21) im Verhältnis zur Düse (11) so eingestellt wird, daß der Kunststoff-Fluß aus- oder angeglichen wird.

2. Verfahren nach Anspruch 1, bei dem ein Verstärkungselement (31, 41) in das Kabel mit einbezogen wird.

3. Verfahren nach Anspruch 2, bei dem das Verstärkungselement (31, 41) ein dielektrisches Verstärkungselement ist.

4. Verfahren nach den Ansprüchen 1, 2 oder 3, bei dem das extrudierte Kunststoffmaterial Polyvinylchlorid, ein schwach rauchendes Null-Halogenmaterial oder thermoplastischen Gummi aufweist.

5. Vorrichtung zur Herstellung eines faseroptischen Kabels, wobei die Vorrichtung eine Kunststoffextrusionseinrichtung zur Erzeugung einer Kunststoffschutzschicht um mindestens ein faseroptisches Element (34, 45) durch Extrusion durch eine Düse (11) aufweist, dadurch gekennzeichnet, daß die Extrusionseinrichtung die folgenden Elemente aufweist: ein röhrenförmiges Element (21), durch das das faseroptische Element (34) oder die faseroptischen Elemente (34) durchgeführt und so angeordnet werden, daß das extrudierte Kunststoffmaterial in zwei oder mehr getrennten Flüssen über eine Entfernung hin geführt werden, so daß bei einem Wieder-Zusammentreffen der Flüsse an den dazwischen auftretenden Nahtstellen eine schwache Verbindung entsteht, wodurch ein selektives Trennen der Kunststoffteile des Kabels ermöglicht wird und dadurch das faseroptische Element (34) oder die faseroptischen Elemente (34) zugänglich werden, und eine Einrichtung (122) zum Einstellen der Position des röhrenförmigen Elements (21) im Verhältnis zur Düse (11), wodurch im Betrieb der Kunststoff-Fluß aus- oder angeglichen wird.

## Revendications

1. Procédé de fabrication d'un câble à fibre optique par extrusion d'une matière plastique, à l'aide d'une filière (11), autour d'au moins un élément en fibre optique (34) afin d'enfermer avec un certain jeu cet élément (34) ou chacun d'eux, caractérisé en ce que, pendant l'extrusion, le flux de matière plastique est divisé en deux flux séparés ou plus grâce à un élément tubulaire (21) à travers lequel l'élément en fibre optique (34) ou chacun d'eux est avancé sur une distance telle que, lorsque les flux se recombinent, une liaison faible est formée à l'interface entre eux, ce qui facilite l'éclatement sélectif de la matière plastique du câble pour accéder à l'élément en fibre optique (34) ou à chacun d'eux, et en ce que la position de l'élément tubulaire (21) est ajustée par rapport à la filière (11) de façon à égaliser ou équilibrer le flux de matière plastique.

2. Procédé selon la revendication 1, dans lequel un élément de rigidité renforcé (31, 41) est incorporé dans le câble.

3. Procédé selon la revendication 2, dans lequel ledit élément de rigidité (31, 41) est un élément de rigidité diélectrique.

4. Procédé selon la revendication 1, 2 ou 3, dans lequel la matière plastique extrudée est du poly(chlorure de vinyle), un matériau ne contenant pas d'halogène et dégageant peu de fumée, ou un caoutchouc thermoplastique.

5. Appareil de fabrication d'un câble à fibre optique, l'appareil comprenant une extrudeuse de matière plastique servant à former, par extrusion à travers une filière (11), une protection en matière plastique autour d'au moins un élément en fibre optique (34, 45), caractérisé en ce que l'extrudeuse comporte un élément tubulaire (21) à travers lequel l'élément en fibre optique (34) ou chacun d'eux est avancé, et disposé de façon à partager la matière plastique extrudée en deux flux séparés ou plus sur une distance telle que, lorsque les flux se recombinent, une liaison faible est formée entre eux, ce qui facilite l'éclatement sélectif de la matière plastique du câble pour accéder à l'élément en fibre optique (34) ou à chacun d'eux, et par un moyen (122) pour ajuster la position de l'élément tubulaire (21) par rapport à la filière (11) de façon à, en service, égaliser ou équilibrer le flux de matière plastique.
